# EUROPEAN PATENT APPLICATION

(11) **EP 4 848 882 A1**
(43) Date of publication of application: **02.12.2026**
(21) Application number: 25758035.7
(22) Date of filing: 04.02.2025
(51) Int. Cl.: H04W 76/18, H04W 16/22, H04W 28/10, H04W 48/16

(54) **COMMUNICATION CONTROL SYSTEM**

(30) Priority: 21.02.2024 JP 2024024617
(71) Applicant: National Institute of Information and Communications Technology, Koganei-shi, Tokyo 184-8795 (JP)
(72) Inventor: IBUKA Kazuo, Koganei-shi, Tokyo 184-8795 (JP); WAKAYAMA Atsushi, Koganei-shi, Tokyo 184-8795 (JP); MURAKAMI Homare, Koganei-shi, Tokyo 184-8795 (JP); MATSUMURA Takeshi, Koganei-shi, Tokyo 184-8795 (JP)
(74) Representative: Müller-Boré & Partner Patentanwälte PartG mbB
(86) International application number: PCT/JP2025/003530
(87) International publication number: WO 2025/177823

(57) **Abstract**

[Problem]

To suppress delays and jitter in communication data even when a change in a wireless environment occurs due to movement of a communication device.

[Solution]

A communication control system includes a communication resource estimation unit 14 that estimates required communication resources required for newly requested communication, a congestion prediction unit 15 that predicts whether requested communication resources requested for the newly requested communication fall within the required communication resources estimated by the communication resource estimation unit 14, and a communication control unit 11 that accepts the newly requested communication when the requested communication resources are predicted to fall within the required communication resources by the congestion prediction unit 15 and rejects the newly requested communication when the requested communication resources are predicted to exceed the required communication resources by the congestion prediction unit 15.

## Description

### TECHNICAL FIELD

The present invention relates to a communication control system suitable for remotely controlling an avatar that performs each operation in a virtual space and a robot or the like that performs each operation in a real space.

### BACKGROUND ART

In recent years, there has been an increasing demand for remotely controlling avatars that perform each operation, such as travel and shopping, in a virtual space and robots or the like that perform each operation, such as heavy machinery operations and surgery, at remote locations in a real space. However, since the quality of communication for performing such remote control is not stable, it frequently occurs that an expected remote operation cannot be achieved. One possible cause of this is so-called congestion, in which access to Internet lines or telephone lines is concentrated. When congestion occurs, communication speed decreases, and moreover, an adverse effect arises in that communication systems themselves go down. Therefore, various approaches have been attempted in order to prevent such congestion as much as possible.

Various techniques for controlling such congestion have been proposed and implemented for many years. However, most of these techniques are for avoiding congestion collapse in Internet lines. Therefore, techniques for avoiding the occurrence of congestion itself in Internet lines or for avoiding delay and jitter in communication data have not yet been proposed. In recent years, Low Latency, Low Loss, and Scalable Throughput (L4S) has been proposed and is beginning to be implemented as a technique for avoiding delay and jitter in communication data on the Internet (see, for example, Non-Patent Document 1).

In L4S, after the occurrence of congestion on a communication path is detected, the inflow amount of communication data into the communication path is reduced, and the amount of queued data in communication devices on the communication path is kept at a low level, thereby achieving low latency and low jitter.

However, since congestion itself on the communication path is unavoidable, a problem arises in that delay and jitter in communication data inevitably occur to some extent. In particular, in a wireless access communication line, changes in a wireless environment caused by movement of communication devices of the above-described avatars, robots, and the like tend to cause delay and jitter in communication data. Therefore, there has long been a need for a technique capable of avoiding congestion on a communication path in cases where such avatars, robots, and the like are remotely controlled, particularly suppressing delay and jitter in communication data even when changes in a wireless environment occur due to movement of communication devices mounted thereon.

### CITED DOCUMENTS

### NON-PATENT LITERATURE

Non-Patent Document 1: RFC 9332 - Dual-Queue Coupled Active Queue Management (AQM) for Low Latency, Low Loss, and Scalable Throughput (L4S)

### DISCLOSURE OF THE INVENTION

### PROBLEMS TO BE SOLVED BY THE INVENTION

Therefore, the present invention has been made in view of the above-described problems, and an object thereof is to provide a communication control system that can avoid congestion on a communication path in a case where an avatar, a robot, or the like is remotely controlled, and, in particular, that can suppress delay and jitter in communication data even when changes in a wireless environment occur due to movement of communication devices mounted thereon.

### SOLUTIONS TO THE PROBLEMS

In order to solve the above-described problems, the inventors of the present invention have invented a communication control system that predicts whether the requested communication resources requested for newly requested communication fall within required communication resources estimated by the communication resource estimation means, accepts the newly requested communication when the requested communication resources are predicted to fall within the required communication resources, and rejects the newly requested communication otherwise.

A communication control system according to a first invention includes communication resource estimation means that estimates required communication resources required for newly requested communication; congestion prediction means that predicts whether the requested communication resources requested for the newly requested communication fall within the required communication resources estimated by the communication resource estimation means; and communication control means that accepts the newly requested communication when the requested communication resources are predicted to fall within the required communication resources by the congestion prediction means, and rejects the newly requested communication when the requested communication resources are predicted to exceed the required communication resources by the congestion prediction means.

In the communication control system according to a second invention, which is in the first invention, when the newly requested communication is wireless communication, the communication resource estimation means estimates the required communication resources based on at least one of location information of a communication target and a time period of the communication.

In the communication control system according to a third invention, which is in the second invention, the communication resource estimation means uses a dataset including at least one of the location information of the communication target and the time period of the communication and the required communication resources as training data, and estimates the required communication resources through the training data in response to input of at least one of the location information of the communication target and the time period of the communication.

In the communication control system according to a fourth invention, which is in the first invention, when the newly requested communication is wired communication, the communication resource estimation means estimates the required communication resources based on at least one of a number of retransmissions on a line to be used in the wired communication, data loss, a communication delay amount, jitter, traffic volume, and communication throughput.

In the communication control system according to a fifth invention, which is in the fourth invention, the communication resource estimation means uses a dataset including the required communication resources and at least one of the number of retransmissions on the line to be used in the wired communication, the data loss, the communication delay amount, the jitter, the traffic volume, and the communication throughput as training data, and the communication resource estimation means estimates the required communication resources through the training data in response to input of at least one of the number of retransmissions, the data loss, the communication delay amount, the jitter, the traffic volume, and the communication throughput.

In the communication control system according to a sixth invention, which is in the first invention, the communication control means performs eviction of the communication request when the requested communication resources are predicted to exceed the required communication resources by the congestion prediction means and when the communication has already started.

### EFFECTS OF THE INVENTION

According to the present invention having the above-described configuration, in managing communication resources, a communication request for which communication resources necessary for achieving desired communication quality are insufficient is rejected in the first place, such that communication resources are not allocated to the communication request. This makes it possible to prompt a communication requester to use a different communication line. By not forcibly allocating communication resources in excess of what is necessary to a communication request for which required communication resources are insufficient, it is possible to accommodate a larger number of other communication requests.

### BRIEF DESCRIPTION OF THE DRAWINGS

Fig. 1 is a block diagram illustrating an access point included in a communication control system to which the present invention is applied.
Fig. 2 is a diagram for describing an internal configuration of the access point.
Fig. 3 is a diagram for describing an internal configuration of a mobile object.
Fig. 4 is a diagram illustrating an example of a communication sequence between a terminal operated by an operator in a case of performing wireless communication and a mobile object.
Fig. 5 is a diagram illustrating an example in which communication resources are allocated to each communication request.
Fig. 6 is a diagram illustrating a relationship between a distance from the access point and required communication resources.
Fig. 7 is a flowchart illustrating acceptance, rejection, and the like of each communication request.
Fig. 8 is a flowchart of a processing operation in a case where communication has already started.
Fig. 9 is a diagram illustrating an estimation model that estimates required communication resources through training data.
Fig. 10 is a diagram illustrating another estimation model that estimates required communication resources through training data.

### DESCRIPTION OF PREFERRED EMBODIMENTS

Hereinafter, one aspect of an embodiment of a communication control system to which the present invention is applied will be described in detail using the drawings.

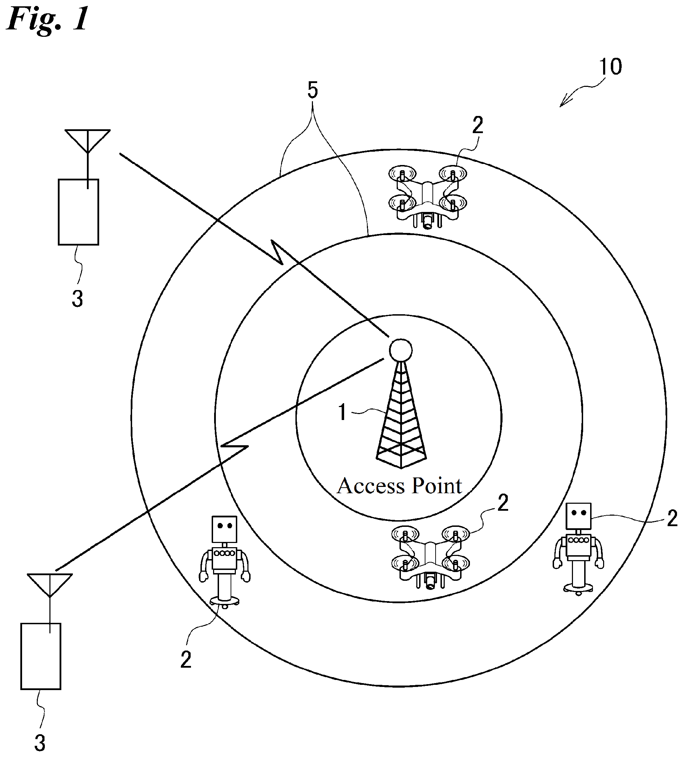

Fig. 1 is a block diagram illustrating an access point 1 included in a communication control system 10 to which the present invention is applied. In the communication control system 10, the access point 1 and a mobile object 2 communicate with each other through wired communication or wireless communication. The mobile objects 2 include drones, ships, robots, and the like operating in a real space, and avatars and the like operating in a virtual space. In addition, the communication control system 10 may further include a terminal 3 through which an operator operates the mobile object 2. Incidentally, when the wireless communication is performed, a wireless access network 5 centered on the access point 1 is formed.

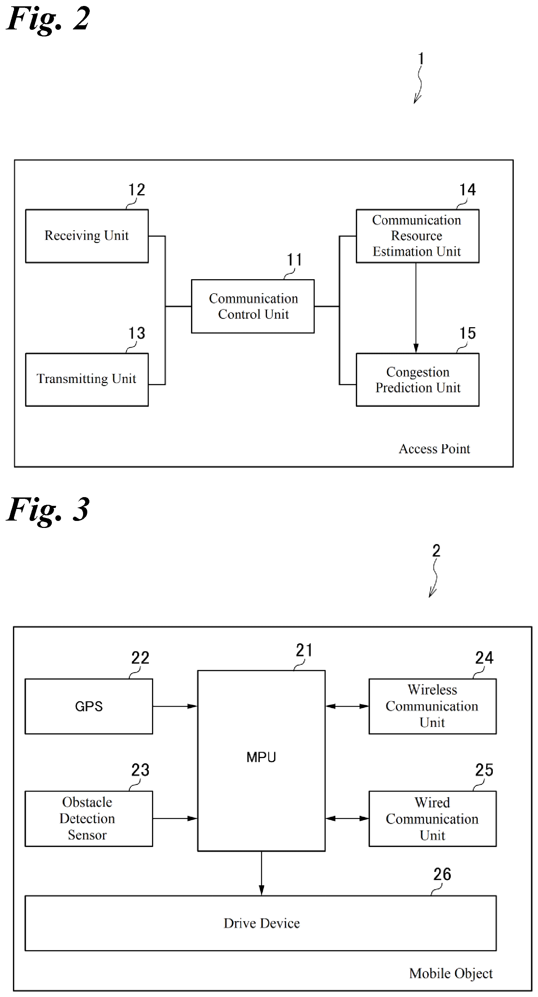

As illustrated in Fig. 2, the access point 1 includes, in addition to a communication control unit 11, a receiving unit 12 that receives signals transmitted from one or more mobile objects 2, a transmitting unit 13 that transmits signals to each terminal 3, a communication resource estimation unit 14 that estimates required communication resources required for newly requested communication, and a congestion prediction unit 15 that predicts congestion.

As illustrated in Fig. 3, the mobile object 2 includes a Micro Processor Unit (MPU) 21, a Global Positioning System (GPS) 22, an obstacle detection sensor 23, a wireless communication unit 24, a wired communication unit 25, and a drive device 26 each connected to the MPU 21.

The communication control unit 11 controls communication performed with the wireless communication unit 24 and the wired communication unit 25 in the mobile object 2. Specifically, the communication control unit 11 controls allocation of communication resources necessary for short-distance to long-distance wireless communication with the wireless communication unit 24. Further, the communication control unit 11 controls allocation of communication resources necessary for wired communication with the wired communication unit 25.

Under the control of the communication control unit 11, the receiving unit 12 receives signals transmitted from the mobile object 2 based on standards of the respective communications.

Under the control of the communication control unit 11, the transmitting unit 13 converts a signal to be transmitted to the mobile object 2 into a wireless signal based on wireless communication standards to transmit the wireless signal, and converts the signal into a wired signal based on wired communication standards to transmit the wired signal.

The communication resource estimation unit 14 first identifies whether a so-called communication request in which communication is newly requested has been received via the receiving unit 12. Then, upon identifying that there has been such a communication request, the communication resource estimation unit 14 estimates required communication resources required for the requested communication. Communication resources refer to various communication capabilities including the communication volume, delay amount, and transmission capacity, and the like.

The estimation of the required communication resources by the communication resource estimation unit 14 differs in its estimation method depending on whether the communication request is for wireless communication or for wired communication. When the received communication request is for wireless communication, required communication resources are estimated based on at least one of location information of a communication target and a time period of the communication. When the received communication request is for wired communication, required communication resources are estimated based on at least one of the number of retransmissions on a line to be used in the wired communication, data loss, the communication delay amount, jitter, traffic volume, and communication throughput.

The congestion prediction unit 15 acquires information regarding the required communication resources estimated by the communication resource estimation unit 14. Further, the congestion prediction unit 15 acquires requested communication resources required for communication newly requested via a communication request. Then, the congestion prediction unit 15 predicts congestion by comparing the required communication resources with the requested communication resources. Details of the congestion prediction will be described in detail in a later section. The congestion prediction unit 15 notifies the communication control unit 11 of the result of this congestion prediction. The communication control unit 11 controls various kinds of communication including allocation of the communication resources based on the result of this notified congestion prediction.

The MPU 21 is a so-called central control unit for controlling each component in the mobile object 2. The GPS 22, the obstacle detection sensor 23, the wireless communication unit 24, the wired communication unit 25, and the drive device 26, which are connected to the MPU 21, all operate under the control of the MPU 21. In memories each connected to the MPU 21, programs necessary for the control of the mobile object 2 and the like are stored.

The GPS 22 has a function of determining the current position of the mobile object 2 by calculating a position, distance, time, and the like. The GPS 22 transmits current location information regarding the determined current position of the mobile object 2 to the MPU 21.

The obstacle detection sensor 23 is constituted of, for example, a laser radar (LiDAR), a camera sensor, and the like. When the obstacle detection sensor 23 is configured as LiDAR, the obstacle detection sensor 23 emits laser light, measures a distance to a surrounding obstacle by observing a delay in reflected light, and transmits the measured distance to the MPU 21.

The wireless communication unit 24 performs wireless communication ranging from a short distance to a long distance with the access point 1. The wireless communication unit 24 converts information transmitted from the MPU 21 into a wireless signal based on the wireless communication standards and transmits the wireless signal. Further, the wireless communication unit 24 converts a received wireless signal into an electrical signal and transmits the electrical signal to the MPU 21. Note that, in a case of the mobile object 2 that performs only wired communication without performing wireless communication, the configuration itself of the wireless communication unit 24 may be omitted.

The wired communication unit 25 performs wired communication with the access point 1 via a line. The wired communication unit 25 converts information transmitted from the MPU 21 into a wired signal based on the wired communication standards and transmits the wired signal. Further, the wired communication unit 25 transmits a wired signal received via a line to the MPU 21. Note that, in a case of the mobile object 2 that performs only wireless communication without performing wired communication, the configuration itself of the wired communication unit 25 may be omitted.

In a case where the mobile object 2 is, for example, a robot that moves by driving wheels, the drive device 26 is constituted of a motor for driving the wheels (not illustrated). In a case where the mobile object 2 is, for example, an unmanned aerial vehicle such as a drone, the drive device 26 is constituted of a motor for driving a rotary propeller (not illustrated). The drive device 26 receives instructions regarding a specific movement start, movement stop, and movement direction from the MPU 21. The drive device 26 drives the motor in response to instructions from the MPU 21, thereby moving the mobile object 2.

In a case where the mobile object 2 is an avatar that operates in a virtual space, a configuration regarding the drive device 26 is embodied as a computer program.

Note that the mobile object 2 may also include a configuration similar to the communication control unit 11, the communication resource estimation unit 14, and the congestion prediction unit 15, which are originally to be implemented in the access point 1. Accordingly, the mobile object 2 can also be provided with functions such as the communication resource estimation, the congestion prediction, and the communication control.

The terminal 3 includes a user interface through which an operator can visually recognize information and perform various operations. The terminal 3 may be embodied as a terminal device capable of wireless communication or wired communication with the access point 1, such as a mobile phone, a smartphone, a tablet terminal, a wearable terminal, and a personal computer (PC).

Next, a description will be given of the operation of the communication control system 10 to which the present invention is applied.

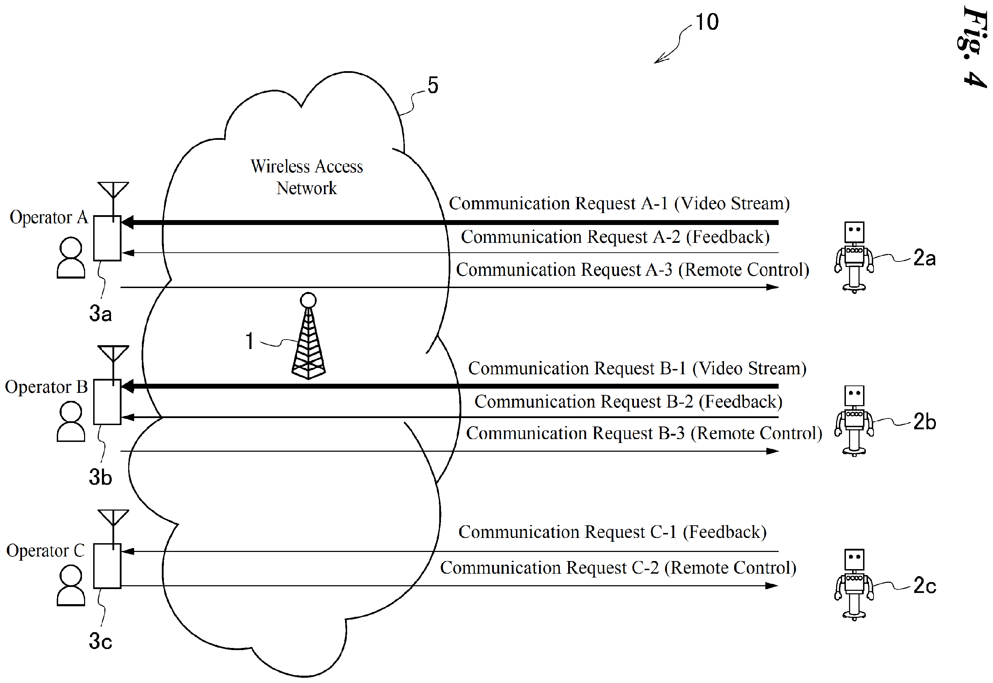

Fig. 4 illustrates an example of a communication sequence between the terminal 3 operated by an operator in a case of performing wireless communication and the mobile object 2. For example, Operator A performs transmission and reception of data between a terminal 3a owned by Operator A and a mobile object 2a via the wireless access network 5 centered on the access point 1.

For example, in the example of Fig. 4, as a communication request A-1 from the mobile object 2a, a video stream constituted of self-captured video data is transmitted to the terminal 3a via the wireless access network 5, and next, as a communication request A-2 from the mobile object 2a, feedback on an operation result previously transmitted by Operator A is transmitted to the terminal 3a. Further, Operator A transmits control data necessary for remote control as a new communication request A-3 from the terminal 3a to the mobile object 2a via the wireless access network 5.

Similarly, in the example of Fig. 4, as a communication request B-1 from a mobile object 2b, a video stream constituted of self-captured video data is transmitted to a terminal 3b via the wireless access network 5, and next, as a communication request B-2 from the mobile object 2b, feedback on an operation result previously transmitted by Operator B is transmitted to the terminal 3b. Further, Operator B transmits control data necessary for remote control as a new communication request B-3 from the terminal 3b to the mobile object 2b via the wireless access network 5.

Similarly, in the example of Fig. 4, as a communication request C-1 from a mobile object 2c, feedback on an operation result previously transmitted by Operator C is transmitted to a terminal 3c. Further, Operator C transmits control data necessary for remote control as a new communication request C-2 from the terminal 3c to the mobile object 2c via the wireless access network 5.

That is, in the wireless access network 5, each of the mobile objects 2a to 2c and each of the terminals 3a to 3c of Operators A to C perform wireless communication and appropriately use communication resources. The allocation of such communication resources is managed and performed based on the communication resource estimation unit 14, the congestion prediction unit 15, and the communication control unit 11 in the above-described access point 1. Specifically, allocation of communication resources in an amount necessary for transmitting a desired amount of communication is performed in accordance with reception quality estimated from a transmission environment.

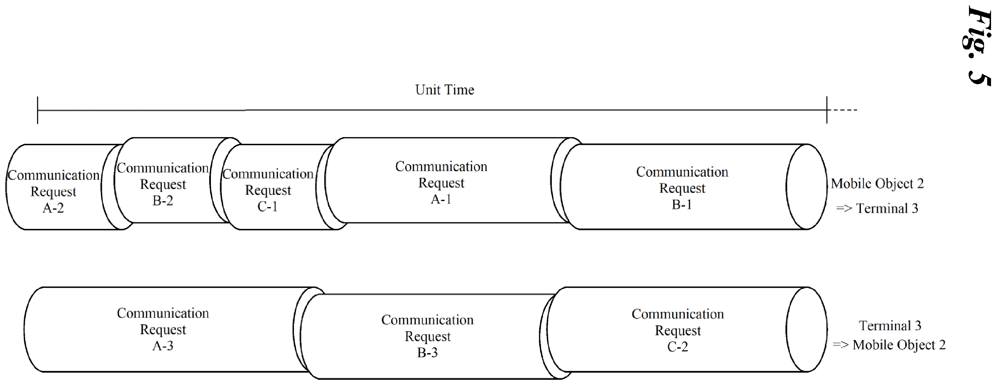

Fig. 5 illustrates an example in which communication resources are allocated to each of the above-described communication requests A to C. In Fig. 5, the upper stage is an example in which communication resources are allocated for communication requests from the mobile object 2 to the terminal 3, and the lower stage is an example in which communication resources are allocated for communication requests from the terminal 3 to the mobile object 2. In each case, the communication resources are indicated by the amount of communication time. That is, more communication resources are allocated to a communication request having a longer communication time, and fewer communication resources are allocated to a communication request having a shorter communication time.

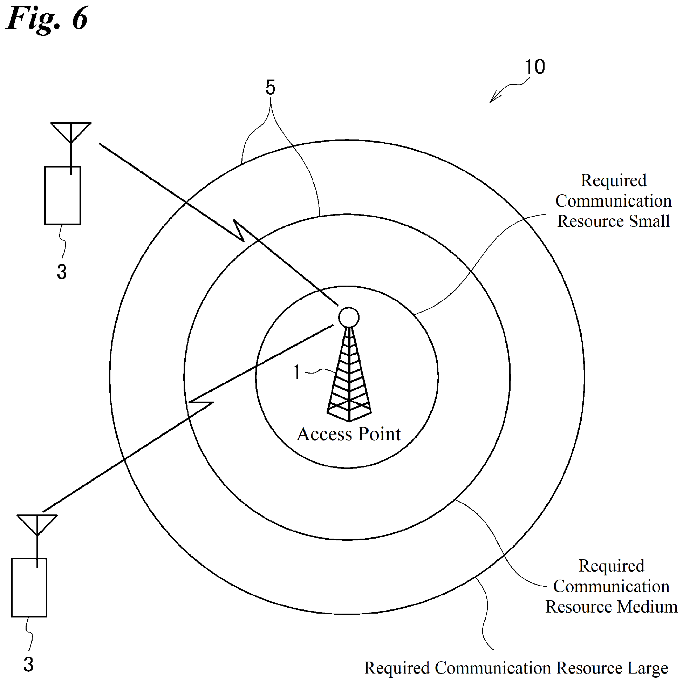

The communication resource estimation unit 14 in the access point 1 estimates required communication resources required for communication to be executed for a new communication request each time the communication request is received. At this time, the communication resource estimation unit 14 may estimate that required communication resources increase in regions farther from the access point 1 in a case of wireless communication, as illustrated in Fig. 6. Similarly, the communication resource estimation unit 14 can estimate that required communication resources decrease as the distance to the access point 1 becomes shorter. The communication resource estimation unit 14 may estimate required communication resources according to interference strength or the like other than this.

The communication control unit 11 allocates communication resources to communication for each communication request based on the required communication resources estimated by the communication resource estimation unit 14 in this manner. At this time, as illustrated in Fig. 5, more communication resources may be allocated to the communication requests A-1 and B-1 that require more required communication resources, and fewer communication resources may be allocated to the communication requests A-2, B-2, C-1, and the like for which communication is possible with fewer required communication resources, by the communication resource estimation unit 14.

Note that, in the present invention, acceptance, rejection, and the like of each communication request may be performed based on the processing flow described below.

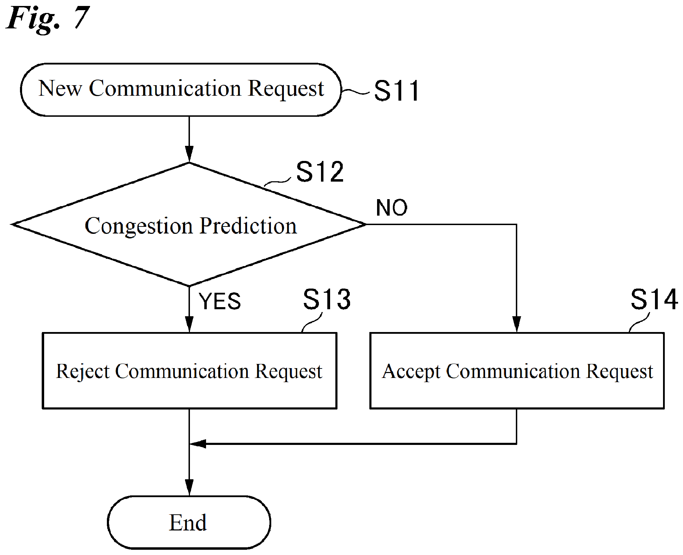

As illustrated in Fig. 7, in Step S11, the access point 1 accepts a new communication request from the terminal 3 side or the mobile object 2 side. After the communication request itself is received by the receiving unit 12 in the access point 1, the communication resource estimation unit 14 estimates required communication resources required for communication for the communication request.

Next, the process proceeds to Step S12, and the congestion prediction unit 15 acquires requested communication resources that are requested for a newly received communication request. The requested communication resources are described in packet data constituting a communication request, and by reading this packet data, the congestion prediction unit 15 may acquire the requested communication resources. The congestion prediction unit 15 predicts whether the acquired requested communication resources fall within the required communication resources estimated by the communication resource estimation unit 14 in Step S11.

As a result, when the requested communication resources exceed the required communication resources and the requested communication resources do not fall within the required communication resources, it is determined that congestion is occurring, and the process proceeds to Step S13. When the requested communication resources are equal to or less than the required communication resources and the requested communication resources fall within the required communication resources, it is determined that congestion is not occurring, and the process proceeds to Step S14.

When the process proceeds to Step S13, since the congestion is occurring, processing of rejecting a communication request, that is, processing of not accepting the communication request, is performed.

In contrast, when the process proceeds to Step S14, since the congestion is not occurring, the communication request is accepted.

That is, in managing communication resources, a communication request for which communication resources necessary for achieving desired communication quality are insufficient is rejected in the first place, such that communication resources are not allocated to the communication request. This makes it possible to prompt a communication requester to use a different communication line. By not forcibly allocating communication resources in excess of what is necessary to a communication request for which required communication resources are insufficient, it is possible to accommodate a larger number of other communication requests.

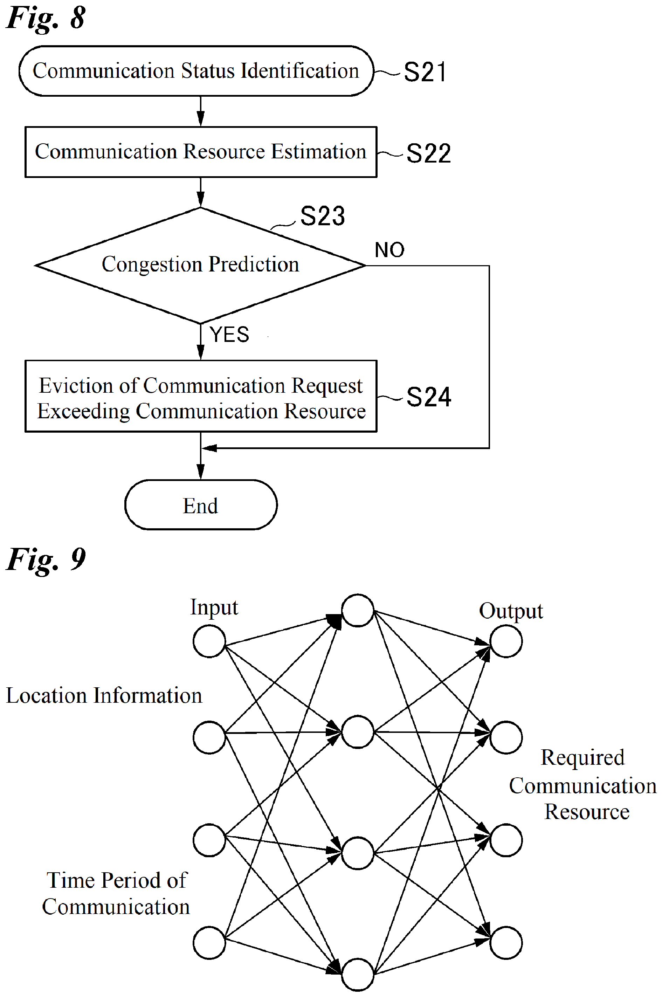

Fig. 8 illustrates a processing operation in a case where communication has already started. In Step S21, first, identification of the status of communication that has already started is performed. For example, in a case of wired communication, the identification of the communication status detects data on the number of retransmissions on the line to be used, the data loss, the communication delay amount, the jitter, the traffic volume, the communication throughput, and the like.

Next, the process proceeds to Step S22, and the communication resource estimation unit 14 estimates required communication resources required for communication for a communication request that is currently being performed.

Next, the process proceeds to Step S23, and, since the requested communication resources requested in the communication request that is currently being performed have already been acquired, the estimation is performed again in accordance with a change in an estimation factor. The congestion prediction unit 15 predicts whether the requested communication resources fall within the required communication resources estimated by the communication resource estimation unit 14 in Step S22.

As a result, when the requested communication resources exceed the required communication resources and the requested communication resources do not fall within the required communication resources, it is determined that congestion is occurring, and the process proceeds to Step S24. When the requested communication resources are equal to or less than the required communication resources and the requested communication resources fall within the required communication resources, it is determined that the congestion is not occurring, and the communication is continued as it is.

When the process proceeds to Step S24, since the congestion is occurring, eviction of a communication request that has already been executed is performed. The eviction of the communication request referred to herein is included in discontinuation of the communication.

In such a case as well, by not forcibly allocating communication resources in excess of what is necessary to a communication request for which required communication resources are insufficient, it is possible to allocate more communication resources to a larger number of other communication requests.

Note that, in the present invention, when a newly requested communication is wireless communication, the communication resource estimation unit 14 may estimate the required communication resources based on at least one of the location information of the terminal 3 or the mobile object 2 serving as the communication target and the time period of the communication. Particularly in a case of wireless communication, since the required communication resources differ depending on the distance at which the communication target is positioned from the access point 1 and on the situation of obstacles at that position, the location information may be used as an explanatory variable. Further, since the required communication resources for wireless communication also vary depending on the time period of the communication, such a time period may be used as an explanatory variable. Incidentally, in obtaining the required communication resources as a dependent variable with the location information and the time period as explanatory variables, any calculation formula may be used, and any weighting may be assigned between the location information and the time period; however, it is premised that a model is for estimating the required communication resources based on at least one of the location information and the time period of the communication.

In the above-described embodiment, the example has been described in which the estimation of communication resources, the congestion prediction, and the communication control are all executed at the access point 1; however, the present invention is not limited thereto, and each of these processing operations may be executed on the mobile object 2 side. In such a case, it is premised that the mobile object 2 includes a configuration similar to the communication control unit 11, the communication resource estimation unit 14, and the congestion prediction unit 15, which are originally to be implemented in the access point 1.

Note that, as illustrated in Fig. 9, a dataset including at least one of the location information of the communication target and the time period of the communication and the required communication resources may be used as training data, and an estimation model that estimates the required communication resources through the training data in response to input of at least one of the location information of the communication target and the time period of the communication may be used. Accordingly, by constructing the training data in advance, artificial intelligence can estimate the required communication resources with high accuracy.

The determination using such a model can also be applied to a communication request for which communication has already started, as illustrated in Fig. 8.

Note that, in the present invention, when newly requested communication is wired communication, the communication resource estimation unit 14 may estimate the required communication resources based on at least one of the number of retransmissions on the line to be used in the wired communication, the data loss, the communication delay amount, the jitter, the traffic volume, and the communication throughput. Incidentally, in obtaining the required communication resources as a dependent variable with the number of retransmissions on the line to be used, the data loss, the communication delay amount, the jitter, the traffic volume, and the communication throughput as explanatory variables, any calculation formula may be used, and any weighting may be assigned among the explanatory variables; however, it is premised that a model is for estimating the required communication resources based on at least one of the above-described explanatory variables.

Note that an explanatory variable used in the wired communication may also be appropriately used to estimate the required communication resources in the wireless communication.

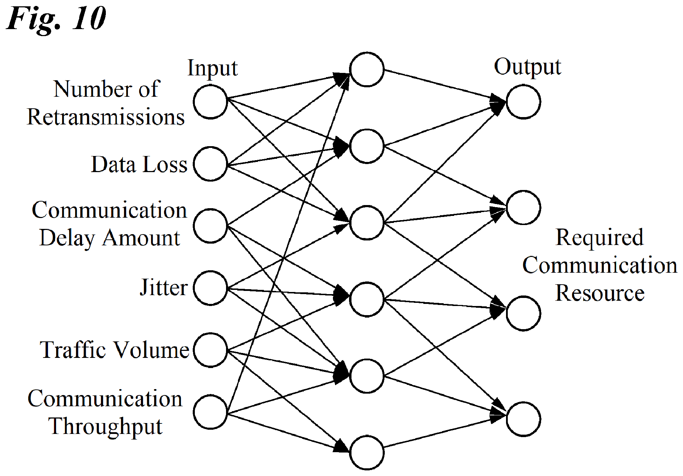

As illustrated in Fig. 10, a dataset including at least one of the number of retransmissions on the line to be used, the data loss, the communication delay amount, the jitter, the traffic volume, and the communication throughput and the required communication resources may be used as training data, and an estimation model that estimates the required communication resources through the training data in response to input of at least one of the location information of the communication target and the time period of the communication may be used. Accordingly, by constructing the training data in advance, artificial intelligence can estimate the required communication resources with high accuracy.

As described above, the present invention can achieve desired throughput, low latency, and low jitter by not allowing communication data exceeding an allowable amount to flow into a communication path. In particular, in the wireless communication, by taking into consideration a communication distance and an amount of interference, it becomes possible to dynamically change the allowable capacity of a communication path.

In particular, according to the present invention, when real-time remote operation is performed while a video captured by the mobile object 2 as a high-resolution operation target via the terminal 3 is visually recognized or while feedback of one's own operation result is obtained, stable video transmission becomes possible by maintaining desired throughput. In addition to this, it becomes possible to perform remote operation without a sense of discomfort by maintaining desired low latency and low jitter.

### DESCRIPTION OF REFERENCE SIGNS

- 1:: Access point
- 2:: Mobile object
- 3:: Terminal
- 5:: Wireless access network
- 10:: Communication control system
- 11:: Communication control unit
- 12:: Receiving unit
- 13:: Transmitting unit
- 14:: Communication resource estimation unit
- 15:: Congestion prediction unit
- 21:: MPU
- 22:: GPS
- 23:: Obstacle detection sensor
- 24:: Wireless communication unit
- 25:: Wired communication unit
- 26:: Drive device

## Claims

1. A communication control system comprising:
communication resource estimation means that estimates required communication resources required for newly requested communication;
congestion prediction means that predicts whether the requested communication resources requested for the newly requested communication fall within the required communication resources estimated by the communication resource estimation means; and
communication control means that accepts the newly requested communication when the requested communication resources are predicted to fall within the required communication resources by the congestion prediction means, and rejects the newly requested communication when the requested communication resources are predicted to exceed the required communication resources by the congestion prediction means.

2. The communication control system according to claim 1, wherein
when the newly requested communication is wireless communication, the communication resource estimation means estimates the required communication resources based on at least one of location information of a communication target and a time period of the communication.

3. The communication control system according to claim 2, wherein
the communication resource estimation means uses a dataset including at least one of the location information of the communication target and the time period of the communication and the required communication resources as training data, and estimates the required communication resources through the training data in response to input of at least one of the location information of the communication target and the time period of the communication.

4. The communication control system according to claim 1, wherein
when the newly requested communication is wired communication, the communication resource estimation means estimates the required communication resources based on at least one of a number of retransmissions on a line to be used in the wired communication, data loss, a communication delay amount, jitter, traffic volume, and communication throughput.

5. The communication control system according to claim 4, wherein
the communication resource estimation means uses a dataset including the required communication resources and at least one of the number of retransmissions on the line to be used in the wired communication, the data loss, the communication delay amount, the jitter, the traffic volume, and the communication throughput as training data, and the communication resource estimation means estimates the required communication resources through the training data in response to input of at least one of the number of retransmissions, the data loss, the communication delay amount, the jitter, the traffic volume, and the communication throughput.

6. The communication control system according to claim 1, wherein
the communication control means performs eviction of the communication request when the requested communication resources are predicted to exceed the required communication resources by the congestion prediction means and when the communication has already started.
